# EUROPÄISCHE PATENTSCHRIFT

(11) **EP 1 050 443 B1**
(45) Veröffentlichungstag und Bekanntmachung des Hinweises auf die Patenterteilung: **22.06.2005**
(21) Anmeldenummer: 00107069.7
(22) Anmeldetag: 04.04.2000
(51) Int. Cl.: B60S 1/48

(54) **Verfahren zur Bestimmung der Gefriertemperatur einer Flüssigkeit und eine hierfür bestimmte Vorrichtung**
Method for the determination of the freezing temperature of a liquid and apparatus therefor
Méthode pour la détermination de la température de congélation d'un liquide et dispositif connexe

(30) Priorität: 04.05.1999 DE 19920370
(43) Veröffentlichungstag der Anmeldung: 08.11.2000
(73) Patentinhaber: Siemens Aktiengesellschaft, 80333 München (DE)
(72) Erfinder: Kober, Rainer, 64297 Darmstadt (DE); Petzold, Sven, 65191 Wiesbaden (DE)

(56) Entgegenhaltungen:
- EP-A- 0 045 106
- EP-A- 0 225 572
- US-A- 5 282 682
- DATABASE WPI Week 8739 Derwent Publications Ltd., London, GB; AN 1987-271681 XP002142397 & DD 245 722 A (UNIV HALLE WITTENBERG), 13. Mai 1987 (1987-05-13)

## Beschreibung

Die Erfindung betrifft ein Verfahren zur Bestimmung der Gefriertemperatur einer sich in einem Flüssigkeitsbehälter eines Kraftfahrzeuges befindlichen Flüssigkeit. Weiterhin betrifft die Erfindung eine für ein Kraftfahrzeug bestimmte Vorrichtung zur Durchführung des Verfahrens.

Verfahren und Messeinrichtungen um bei einer Scheibenreinigungsanlage in modernen Kraftfahrzeugen das Absinken der erforderlichen Frostschutzmittelkonzentration in der Flüssigkeit unter einen vorgegebenen Sollwert frühzeitig zu erkennen und so mögliche Frostschäden zu vermeiden, sind prinzipiell, beispielsweise mit Hilfe einer optischen und/oder akustischen Warnanzeige, bekannt.

Dabei erweist sich in der Praxis als hinderlich, dass die Dosierung der Reinigungsflüssigkeit und von Frostschutzmitteln im Wesentlichen nach Augenmaß erfolgt, da zumeist weder der Flüssigkeitsbehälter der Scheibenreinigungsanlage, noch der Frostschutzmittelbehälter eine geeignete Skalierung aufweisen und die Dosieranleitung daher häufig nicht eingehalten wird. Weiterhin erweist sich als nachteilig, dass im Laufe der Zeit der Flüssigkeit eine Vielzahl von unterschiedlichen Zusätzen, wie beispielsweise verschiedenwertige Alkohole oder Tenside, beigegeben werden, deren Zusammensetzung und Zusammenwirken kaum bestimmbar ist.

Um dem Fahrzeugbesitzer dennoch die lästige manuelle Überprüfung zu ersparen, ist es auch denkbar, eine Messeinrichtung mit einem chemischen Sensor auszurüsten, der die Zusammensetzung der Flüssigkeit erkennen kann und so mittels einer Steuereinheit einen Rückschluss auf die Gefrierpunktserniedrigung zulässt. In der Praxis hat sich jedoch gezeigt, dass sich auf der Oberfläche eines derartigen Sensors Ablagerungen - insbesondere Verkalkungen - bilden, die das Messergebnis beeinflussen. Für eine gleichbleibend hohe Messgenauigkeit ist es daher erforderlich, den Sensor in regelmäßigen Abständen zu reinigen. Der gegenüber einer manuellen Messung gewonnene Vorteil entfällt dadurch weitgehend, so dass der praktische Nutzen fragwürdig erscheint.

Der Erfindung liegt daher das Problem zugrunde, ein praxistaugliches Verfahren zu schaffen, welches auch bei längerem Gebrauch zuverlässig Aufschluss über den zu erwartenden Gefrierpunkt der Flüssigkeit gibt. Weiterhin soll eine Vorrichtung zur Durchführung des Verfahrens geschaffen werden.

Das erstgenannte Problem wird erfindungsgemäß dadurch gelöst, dass ein Teilvolumen der Flüssigkeit gekühlt und dabei zugleich die Temperatur und die Änderung des Aggregatzustandes der Flüssigkeit im Teilvolumen erfasst wird. Hierdurch ist es möglich, die Gefriertemperatur der Flüssigkeit ohne Kenntnis der genauen Zusammensetzung der Flüssigkeit zu ermitteln. Zugleich können mit dem Verfahren über einen langen Zeitraum hinweg gleichbleibend gute Messergebnisse erzielt werden, da der Temperatursensor im Vergleich zu chemischen Sensoren wesentlich unempfindlicher ist und insbesondere keine regelmäßige Reinigung oder Wartung erfordert. Dabei lassen sich wesentlich genauere Messergebnisse erreichen, da die Gefriertemperatur unmittelbar gemessen wird und daher der Rückschluss von der Zusammensetzung der Flüssigkeit auf die Gefriertemperatur und damit zugleich auch eine mögliche Fehlerquelle entfällt.

Die Änderung des Aggregatzustandes könnte beispielsweise durch ein physikalisches Verfahren mittels einer Druckmesszelle erfasst werden, über die die mit dem Einfrieren verbundene Ausdehnung erkennbar ist. Eine besonders vorteilhafte Ausführungsform der Erfindung wird hingegen dadurch erreicht, dass die bei der Änderung des Aggregatzustandes der in dem Teilvolumen befindlichen Flüssigkeit frei werdende Erstarrungswärme als verzögerte Temperaturabnahme erfasst wird. Zur Bestimmung der Gefriertemperatur wird dabei das Flüssigkeitsteilvolumen in einer mit dem Hauptflüssigkeitsbehälter verbundenen Kammer im Wesentlichen gleichmäßig abgekühlt. Bei der beginnenden Umwandlung von der flüssigen in die feste Phase wird die Umwandlungswärme als Erstarrungswärme frei. Diese Erstarrungswärme wird als verzögerte Temperaturabnahme, - registriert beispielsweise von einem Temperatursensor -, bei unveränderter Wärmeabfuhr durch ein Kühlelement erkennbar. Durch dieses Temperaturplateau ist die Gefriertemperatur daher mit vergleichsweise hoher Genauigkeit bestimmt, wobei auf das vollständige Gefrieren der Flüssigkeit verzichtet werden kann. Durch Vergleich der so ermittelten Gefriertemperaturdifferenz der Flüssigkeit zu reinem Wasser kann zugleich auch in einfacher Weise auf die Konzentration der gefrierpunktserniedrigenden Zusätze geschlossen werden.

Eine andere besonders vorteilhafte Ausführungsform der Erfindung ist dann gegeben, wenn die mit der Änderung des Aggregatzustandes der Flüssigkeit verbundene Änderung des elektrischen Leitwertes erfasst wird. Hierzu wird der elektrische Leitwert bzw. der elektrische Widerstand der Flüssigkeit gemessen. Über die bekannte Temperaturabhängigkeit des Leitwertes der Flüssigkeit kann mittels einer zentralen Recheneinheit auf die Gefriertemperatur geschlossen werden. Denkbar ist hierbei auch eine Ermittlung der Gefriertemperatur durch Extrapolation repräsentativer Werte deutlich oberhalb der Gefriertemperatur.

Besonders günstig ist eine Weiterbildung der Erfindung, bei der die gekühlte Flüssigkeit nach der Bestimmung der Gefriertemperatur erwärmt und der Messvorgang anschließend wiederholt wird. Hierdurch können Abweichungen bei der Bestimmung der Gefriertemperatur ausgeglichen werden und so die Genauigkeit erhöht werden. Dabei lässt sich zugleich durch eine Erwärmung der Flüssigkeit über das Niveau der Umgebungstemperatur hinaus eine wirkungsvolle Vermischung der in der Flüssigkeit enthaltenen Substanzen erreichen, so dass Messungenauigkeiten durch örtliche Konzentrationsunterschiede vermieden werden können.

Besonders nützlich ist es auch, wenn im Anschluss an die Bestimmung der Gefriertemperatur gegebenenfalls eine Zufuhr eines Frostschutzmittels ausgelöst wird. Durch Zufuhr des die Gefriertemperatur erniedrigenden Frostschutzmittels kann die Gefriertemperatur ohne einen manuellen Eingriff auf einen gewünschten Wert eingestellt werden. Das Frostschutzmittel wird hierzu in einen mit dem Flüssigkeitsbehälter verbunden Zusatzbehälter eingefüllt und kann mittels eines automatischen Ventils der Flüssigkeit zugeführt werden. Denkbar ist auch die Ausnutzung der Volumenausdehnung beim Gefrieren der Flüssigkeit zum Fördern des Frostschutzmittels, indem die Volumenausdehnung beispielsweise ähnlich einer Membranpumpe zum Fördern des Frostschutzmittels genutzt wird.

Eine andere nützliche Weiterbildung wird auch dadurch erreicht, dass bei einer Abweichung der gemessenen Gefriertemperatur von einem Sollwert ein Signal für den Kraftfahrzeuginsassen ausgelöst wird, das auf das erforderliche Nachfüllen von Frostschutzmittel hinweist. Der Kraftfahrzeuginsasse wird dadurch über alle relevanten Daten informiert, um so die Durchführung und das Ergebnis der Gefriertemperaturbestimmung kontrollieren und entsprechende Konsequenzen einleiten zu können. Die ermittelte Gefriertemperatur der Flüssigkeit kann dabei auch in Bezug zu der Umgebungstemperatur gesetzt und gegebenenfalls ein entsprechender Hinweis für den Kraftfahrzeuginsassen ausgelöst werden.

Das zweitgenannte Problem, die Schaffung einer für ein Kraftfahrzeug bestimmten Vorrichtung zur Durchführung des Verfahrens, welche zur Bestimmung der Gefriertemperatur einer Flüssigkeit einen mit einer Steuereinheit verbundenen Sensor hat, wird erfindungsgemäß dadurch erreicht, dass die Vorrichtung eine ein Teilvolumen der Flüssigkeit einschließende und einen Austausch der Flüssigkeit zulassende Kammer eines Flüssigkeitsbehälters und einen Sensor zur Bestimmung der Änderung des Aggregatzustandes der in dem Teilvolumen mittels eines Kühlelementes gekühlten Flüssigkeit umfasst. Hierdurch ist es möglich, die Gefriertemperatur der Flüssigkeit unabhängig von der chemischen Zusammensetzung zuverlässig zu bestimmen. Dabei wird die Flüssigkeit in der Kammer mittels des Kühlelementes kontinuierlich gekühlt, bis die gemessene Temperatur aufgrund der frei werdenden Erstarrungswärme bei fortwährender Wärmeabfuhr nicht weiter absinkt. Dieses Temperaturplateau zeigt zugleich das Erreichen der Gefriertemperatur an, zu deren Erfassung demnach lediglich mittels der Steuereinheit ein Abgleich zwischen der abgeführten Wärme und der gemessenen Temperatur erfolgen muss. Dadurch, dass lediglich ein Teilvolumen der Flüssigkeit abgekühlt wird, während das verbleibende Flüssigkeitsvolumen weiter nutzbar ist, lässt sich durch ein geringes Volumen auch die zur Durchführung der Messung erforderlich Zeit und Energie verringern.

Eine andere besonders günstige Ausgestaltung der Erfindung ist dann gegeben, wenn die Vorrichtung einen weiteren Sensor zur Erfassung des Aggregatzustandes der Flüssigkeit hat. Ein solcher beispielsweise als Druckmesszelle ausgeführter Sensor ermöglicht auch dann eine genaue Bestimmung der Gefriertemperatur, wenn eine zuverlässige Erfassung der mittels des Kühlelementes abgeführten Wärme nicht vorgenommen werden kann.

Besonders einfach ist auch eine Weiterbildung der Erfindung, wenn der weitere Sensor zur Bestimmung des Leitwertes der Flüssigkeit ausgeführt ist. Hierdurch kann der mit dem Einfrieren der Flüssigkeit verbundene Aufwand verringert werden, indem bei einer im geringen Umfang vorgenommenen Abkühlung der Flüssigkeit und der dabei gemessenen Veränderung des Leitwertes die Gefriertemperatur rechnerisch ermittelt wird.

Besonders zweckmäßig ist es dabei auch, wenn das Kühlelement ein Peltierelement ist. Hierdurch wird eine problemlose Umrechnung der mittels des Peltierelementes erreichten Wärmeabfuhr auf Basis der Stromaufnahme möglich. Zugleich kann das Peltierelement auch als Heizelement genutzt werden, um so die Flüssigkeit nach dem Gefrieren schnell erwärmen zu können, wobei zugleich auch die Vermischung der verschiedenen Bestandteile der Flüssigkeit verbessert werden kann.

Als besonders vorteilhaft hat es sich erwiesen wenn die Kammer im Inneren des Flüssigkeitsbehälters angeordnet ist. Es wird lediglich ein Teilvolumen der Flüssigkeit abgekühlt, während das verbleibende Flüssigkeitsvolumen im Hauptbehälter weiter nutzbar ist. Hierzu ist die Kammer beispielsweise im Inneren des Flüssigkeitsbehälters an einer Wand- oder Bodenfläche angeordnet und mittels einer kleinen Öffnung mit dem Flüssigkeitsbehälter verbunden. Die Vorrichtung lässt sich dabei auch bei vorhandenen Einrichtungen mühelos nachrüsten und kann hierzu beispielsweise in den Flüssigkeitsbehälter auch ohne Fixierung eingesetzt werden. Eine andere Möglichkeit der Plazierung der Kammer besteht darin, diese im Ansaugstutzen der die Flüssigkeit fördenden Pumpe anzuordnen.

Besonders sinnvoll ist es, wenn der Austausch der Flüssigkeit zwischen der Kammer und dem Flüssigkeitsbehälter mittels eines Ventils einstellbar ist. Hierdurch kann das Austreten der Flüssigkeit und damit das Nachströmen warmer Flüssigkeit verhindert werden, um so die Messung zu beschleunigen. Zugleich können Messfehler, die durch partielles Einfrieren einzelner Bestandteile der Flüssigkeit entstehen können, vermieden werden.

Hilfreich ist es auch, wenn die Kammer derart mit dem Flüssigkeitsbehälter verbunden ist, dass mit der Zufuhr frischer Flüssigkeit zugleich der Austausch des Teilvolumens innerhalb der Kammer verbunden ist. Dadurch führt jede Befüllung des Flüssigkeitsbehälters mit frischer Flüssigkeit zugleich zu einer ausreichenden Vermischung innerhalb der Kammer. Der Inhalt der Kammer entspricht somit weitgehend dem Flüssigkeitsgemisch in dem Flüssigkeitsbehälter, so dass lokale Konzentrationsunterschiede verhindert werden können. Die Kammer ist hierzu beispielsweise im Bereich der Einfüllöffnung des Flüssigkeitsbehälters angebracht und wird dadurch beim Einfüllen der Flüssigkeit durchströmt oder nach dem Prinzip einer Saugstrahlpumpe zunächst entleert.

Eine besonders einfache Ausführungsform der Erfindung ist auch dann gegeben, wenn der Sensor der Vorrichtung innerhalb eines ein Teilvolumen der Flüssigkeit aufnehmenden saugfähigen Mediums angeordnet ist. Das beispielsweise als Schwamm ausgeführte saugfähige Medium verhindert dabei wirkungsvoll den Austausch der abgekühlten Flüssigkeit gegen die vergleichsweise übrige Flüssigkeit außerhalb der Kammer, so dass auch hierbei ein lediglich geringes Flüssigkeitsvolumen gekühlt werden muss. Dabei kann das saugfähige Medium ohne konstruktive Änderungen an dem Flüssigkeitsbehälter flexibel eingesetzt werden. In ähnlicher Weise ist auch zur Abgrenzung eines Teilvolumens der Flüssigkeit eine Membran denkbar.

Die Erfindung eignet sich grundsätzlich für beliebige Flüssigkeiten, wie beispielsweise ein Motorkühlmittel oder eine Bremsflüssigkeit, wobei im Falle der Bremsflüssigkeit die Erfindung in analoger Weise zur Bestimmung des Wassergehaltes der Bremsflüssigkeit angewendet werden kann. Hingegen eignet sich die Vorrichtung besonders gut zur Anwendung bei einer Reinigungsflüssigkeit, bei der die Flüssigkeit ein mit einem Frostschutzmittel versehenes Flüssigkeitsgemisch einer Scheibenreinigungsanlage ist, da die Scheibenreinigungsanlage hierdurch eine beliebige Zusammensetzung des Flüssigkeitsgemisches aufweisen kann und die Vorrichtung dennoch im Wesentlichen keinerlei Pflege oder Wartung erfordert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine Phasenumwandlung einer Flüssigkeit bei kontinuierlicher Abkühlung,
- Fig.2: eine geschnittene Seitenansicht eines Flüssigkeitsbehälters mit einer erfindungsgemäßen Vorrichtung.

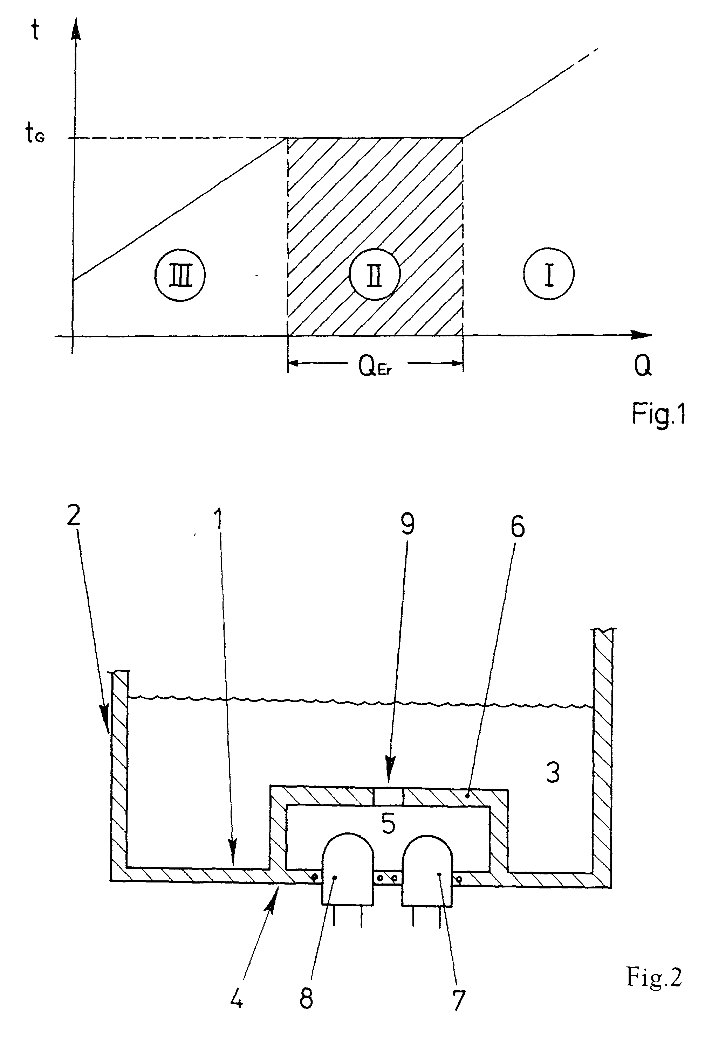

Figur 1 zeigt in einer prinzipiellen Darstellung eine Phasenumwandlung einer Flüssigkeit bei einer im Wesentlichen kontinuierlichen Abkühlung und dient der Erläuterung des Messprinzipes der in Figur 2 näher beschriebenen Vorrichtung 4. Dabei nimmt bei kontinuierlich abgeführter Wärme ΔQ in der flüssigen Phase I zunächst die gemessene Temperatur t der Flüssigkeit linear ab. Beim Eintritt in die Umwandlungsphase II bleibt die gemessene Temperatur t jedoch aufgrund der frei werdenden Erstarrungswärme Q_{Er} bei fortgesetzter Abfuhr der Wärme ΔQ im Wesentlichen unverändert. Dieses Temperaturplateau wird durch Vergleich der gemessenen Temperaturen t erfasst und kennzeichnet so zugleich die Gefriertemperatur t_{G} der Flüssigkeit. Erst nach Abschluss der Umwandlungsphase II und dem anschließenden Eintritt in die feste Phase III sinkt auch die Temperatur t weiter ab. Das Messprinzip der Messvorrichtung 4 beruht demnach auf einer vergleichenden Betrachtung der gemessenen Temperatur t in Abhängigkeit der zugleich abgeführten Wärme ΔQ der Flüssigkeit, wobei die Wärmeabfuhr nicht zwangsläufig stetig erfolgen muss. Ferner kann dabei auch auf eine Abkühlung der Flüssigkeit bis zum Abschluss der Umwandlungsphase II verzichtet werden.

Figur 2 zeigt in einer seitlichen Schnittdarstellung einen unteren Bodenbereich 1 eines lediglich abschnittsweise dargestellten Flüssigkeitsbehälters 2 mit einer Flüssigkeit 3. In diesem Bodenbereich 1 des Flüssigkeitsbehälters 2 ist eine Messvorrichtung 4 mit einer ein geringes Teilvolumen 5 der Flüssigkeit 3 einschließenden Kammer 6 angeordnet. In diese Kammer 6 ragen jeweils ein außerhalb des Flüssigkeitsbehälters 2 kontaktiertes und als Peltierelement ausgeführtes Kühlelement 7 und ein zur Bestimmung der Temperatur ausgeführter Sensor 8 hinein. Mittels des Kühlelementes 7 wird zur Durchführung der Gefriertemperaturbestimmung das Teilvolumen 5 abgekühlt, bis bei unveränderter Wärmeabfuhr eine gleichbleibende Temperatur der Flüssigkeit 3 gemessen wird. Dieses Temperaturplateau kennzeichnet zugleich die einsetzende Phasenumwandlung und somit auch das Erreichen der Gefriertemperatur. Die Kammer 6 ist mittels einer Öffnung 9 mit dem Flüssigkeitsbehälter 2 verbunden, der so bemessen ist, dass der Flüssigkeitsaustausch weitgehend ungehindert erfolgen kann und dennoch ein Messvorgang bei lediglich in unerheblichem Umfang nachströmender, nicht abgekühlter Flüssigkeit 3 erfolgen kann.

Die Vorrichtung 4 kann ferner mit einem weiteren Sensor zur Erfassung der Phasenumwandlung ausgestattet sein, um auch bei unbekannter Wärmeabfuhr eine Bestimmung der Gefriertemperatur zu ermöglichen.

## Patentansprüche

1. Verfahren zur Bestimmung der Gefriertemperatur einer sich in einem Flüssigkeitsbehälter (2) eines Kraftfahrzeuges befindlichen Flüssigkeit, **dadurch gekennzeichnet, dass** ein Teilvolumen der Flüssigkeit gekühlt und dabei zugleich die Temperatur und die Änderung des Aggregatzustandes der Flüssigkeit im Teilvolumen (5) erfasst wird.

2. Verfahren nach Anspruch 1, **dadurch gekennzeichnet, dass** die bei der Änderung des Aggregatzustandes der Flüssigkeit in dem Teilvolumen frei werdende Erstarrungswärme als verzögerte Temperaturabnahme erfasst wird.

3. Verfahren nach Anspruch 1 oder 2, **dadurch gekennzeichnet, dass** die mit der Änderung des Aggregatzustandes der Flüssigkeit verbundene Änderung des elektrischen Leitwertes erfasst wird.

4. Verfahren nach einem der vorhergehenden Ansprüche 1 bis 3, **dadurch gekennzeichnet, dass** die gekühlte Flüssigkeit nach der Bestimmung der Gefriertemperatur erwärmt und der Messvorgang anschließend wiederholt wird.

5. Verfahren nach einem der vorhergehenden Ansprüche 1 bis 4, **dadurch gekennzeichnet, dass** im Anschluss an die Bestimmung der Gefriertemperatur gegebenenfalls eine Zufuhr eines Frostschutzmittels ausgelöst wird.

6. Verfahren nach einem der vorhergehenden Ansprüche 1 bis 5, **dadurch gekennzeichnet, dass** bei einer Abweichung der gemessenen Gefriertemperatur von einem Sollwert ein Signal für den Kraftfahrzeuginsassen ausgelöst wird.

7. Für ein Kraftfahrzeug bestimmte Vorrichtung zur Durchführung des Verfahrens nach einem der vorhergehenden Ansprüche, welche zur Bestimmung der Gefriertemperatur einer Flüssigkeit einen mit einer Steuereinheit verbundenen Sensor hat, **dadurch gekennzeichnet, dass** die Vorrichtung (4) eine ein Teilvolumen (5) der Flüssigkeit (3) einschließende und einen Austausch der Flüssigkeit (3) zulassende Kammer (6) eines Flüssigkeitsbehälters (2) und einen Sensor (8) zur Bestimmung der Änderung des Aggregatzustandes der im Teilvolumen mittels Kühlelementes (7) gekühlten Flüssigkeit (Teilvolumen 5)umfasst.

8. Vorrichtung nach Anspruch 7, **dadurch gekennzeichnet, dass** die Vorrichtung (4) einen weiteren Sensor zur Erfassung des Aggregatzustandes der Flüssigkeit (3) hat.

9. Vorrichtung nach Anspruch 8, **dadurch gekennzeichnet, dass** der weitere Sensor zur Bestimmung des Leitwertes der Flüssigkeit (3) ausgeführt ist.

10. Vorrichtung nach einem der vorhergehenden Ansprüche 7 bis 9, **dadurch gekennzeichnet, dass** das Kühlelement (7) ein Peltierelement ist.

11. Vorrichtung nach einem der vorhergehenden Ansprüche 7 bis 10, **dadurch gekennzeichnet, dass** die Kammer (6) im Inneren des Flüssigkeitsbehälters (2) angeordnet ist.

12. Vorrichtung nach Anspruch 11, **dadurch gekennzeichnet, dass** die Kammer (6) in einem in das Innere des Flüssigkeitsbehälters (2) hineinragenden Ansaugstutzen der die Flüssigkeit (3) fördernden Pumpe angeordnet ist.

13. Vorrichtung nach einem der vorhergehenden Ansprüche 7 bis 12, **dadurch gekennzeichnet, dass** der Austausch der Flüssigkeit (3) zwischen der Kammer (6) und dem Flüssigkeitsbehälter (2) mittels eines Ventils einstellbar ist.

14. Vorrichtung nach einem der vorhergehenden Ansprüche 7 bis 13, **dadurch gekennzeichnet, dass** die Kammer (6) derart mit dem Flüssigkeitsbehälter (2) verbunden ist, dass mit der Zufuhr frischer Flüssigkeit (3) zugleich der Austausch des Teilvolumens (5) innerhalb der Kammer (6) verbunden ist.

15. Vorrichtung nach einem der vorhergehenden Ansprüche 7 bis 14, **dadurch gekennzeichnet, dass** der Sensor (8) der Vorrichtung (4) innerhalb eines ein Teilvolumen (5) der Flüssigkeit (3) aufnehmenden saugfähigen Mediums angeordnet ist.

16. Vorrichtung nach einem der vorhergehenden Ansprüche 7 bis 15, **dadurch gekennzeichnet, dass** die Flüssigkeit (3) ein mit einem Frostschutzmittel versehenes Flüssigkeitsgemisch einer Scheibenreinigungsanlage ist.

## Claims

1. Method for determining the freezing temperature of a liquid located in a liquid container (2) of a motor vehicle, **characterized in that** a partial volume of the liquid is cooled and in the process the temperature and the change in aggregate state of the liquid in the partial volume (5) are detected.

2. Method according to Claim 1, charaterized in that the heat of solidification released in the partial volume upon the change in the aggregate state of the liquid is detected as a delayed temperature decrease.

3. Method according to Claim 1 or 2, **characterized in that** the change in the electric admittance associated with the change in the aggregate state of the liquid is detected.

4. Method according to one of the preceding Claims 1 to 3, **characterized in that** the cooled liquid is heated after the determination of the freezing temperature, and the measuring operation is subsequently repeated.

5. Method according to one of the preceding Claims 1 to 4, **characterized in that** feeding of an antifreeze agent is initiated, if appropriate, following the determination of the freezing temperature.

6. Method according to one of the preceding Claims 1 to 5, **characterized in that** a signal for the motor vehicle occupant is triggered in the event of a deviation of the measured freezing temperature from a desired value.

7. Device, intended for a motor vehicle, for carrying out the method according to one of the preceding claims, which device, for the purpose of determining the freezing temperature of a liquid, has a sensor, connected to a control unit **characterized in that** the device (4) comprises a chamber (6), enclosing a partial volume (5) of the liquid (3) and permitting an exchange of the liquid (3), of a liquid container (2), and a sensor (8) for determining the change in the aggregate state of the liquid (partial volume 5) cooled in the partial volume by means of a cooling element (7).

8. Device according to Claim 7, **characterized in that** the device (4) has a further sensor for detecting the aggregate state of the liquid (3).

9. Device according to Claim 8, **characterized in that** the further sensor is designed for determining the admittance of the liquid (3).

10. Device according to one of the preceding Claims 7 to 9, **characterized in that** the cooling element (7) is a Peltier element.

11. Device according to one of the preceding Claims 7 to 10, **characterized in that** the chamber (6) is arranged in the interior of the liquid container (2).

12. Device according to Claim 11, **characterized in that** the chamber (6) is arranged in a suction connection, projecting into the interior of the liquid container (2), of the pump delivering the liquid (3).

13. Device according to one of the preceding Claims 7 to 12, **characterized in that** the exchange of the liquid (3) between the chamber (6) and the liquid container (2) can be set by means of a valve.

14. Device according to one of the preceding Claims 7 to 13, **characterized in that** the chamber (6) is connected to the liquid container (2) in such a way that the exchange of the partial volume (5) inside the chamber (6) is simultaneously associated with the feeding of fresh liquid (3).

15. Device according to one of the preceding Claims 7 to 14, **characterized in that** the sensor (8) of the device (4) is arranged inside an absorbent medium holding a partial volume (5) of the liquid (3).

16. Device according to one of the preceding Claims 7 to 15, **characterized in that** the liquid (3) is a liquid mixture, provided with an antifreeze agent, of a window-cleaning system.

## Revendications

1. Méthode permettant de déterminer la température de congélation d'un liquide se trouvant dans un réservoir de liquide (2) d'un véhicule automobile **caractérisée par le fait qu'**un volume partiel de liquide est refroidi et que, ce faisant, la température et la modification de l'état d'agrégation du liquide sont détectées simultanément dans le volume partiel (5).

2. Méthode selon la revendication 1 **caractérisée par le fait que** la chaleur de solidification libérée dans le volume partiel pendant la modification de l'état d'agrégation du liquide est détectée comme retard à la baisse de la température.

3. Méthode selon la revendication 1 ou 2 **caractérisée par le fait qu'**on détecte la variation de la conductance électrique liée à la variation de l'état de solidification du liquide.

4. Méthode selon l'une des revendications précédentes 1 à 3 **caractérisée par le fait que** le liquide refroidi est réchauffé après la détermination de la température de congélation et que le processus de mesure est ensuite répété.

5. Méthode selon l'une des revendications précédentes 1 à 4 **caractérisée par le fait que**, après la détermination de la température de congélation, le cas échéant, une adjonction de produit anti-gel est déclenchée.

6. Méthode selon l'une des revendications précédentes 1 à 5 **caractérisée par le fait que**, lors d'un écart, par rapport à une valeur de consigne, de la température de congélation mesurée, un signal est déclenché à l'intention des passagers du véhicule automobile.

7. Dispositif destiné à un véhicule automobile, permettant d'appliquer la méthode selon l'une des revendications précédentes et comportant un capteur permettant de déterminer la température de congélation d'un liquide relié à une unité de contrôle, **caractérisé par le fait que** le dispositif (4) comporte un compartiment (6) d'un réservoir de liquide (2), renfermant un volume partiel (5) du liquide (3) et permettant un échange du liquide (3), et un capteur (8) permettant de déterminer la modification de l'état d'agrégation du volume partiel (5) du liquide refroidi au moyen d'un élément frigorifique (7) se trouvant dans le volume partiel.

8. Dispositif selon la revendication 7 **caractérisé par le fait que** le dispositif (4) a un autre capteur permettant de détecter l'état d'agrégation du liquide (3).

9. Dispositif selon la revendication 8 **caractérisé par le fait que** l'autre capteur est conçu pour déterminer la conductance du liquide (3).

10. Dispositif selon l'une des revendications précédentes 7 à 9 **caractérisé par le fait que** l'élément frigorifique (7) est un élément Peltier.

11. Dispositif selon l'une des revendications précédentes 7 à 10 **caractérisé par le fait que** le compartiment (6) est disposé à l'intérieur du réservoir de liquide (2).

12. Dispositif selon la revendication 1 1 **caractérisé par le fait que** le compartiment (6) est disposé dans une tubulure d'aspiration, faisant saillie dans l'intérieur du réservoir de liquide (2), de la pompe transportant le liquide (3).

13. Dispositif selon l'une des revendications précédentes 7 à 12 **caractérisé par le fait que** l'échange du liquide (3) entre le compartiment (6) et le réservoir de liquide (2) peut être réglé grâce à une vanne.

14. Dispositif selon l'une des revendications précédentes 7 à 13 **caractérisé par le fait que** le compartiment (6) est relié au réservoir de liquide (2) de manière telle que, simultanément avec l'apport de liquide frais (3), le volume partiel (5) à l'intérieur du compartiment (6) est remplacé.

15. Dispositif selon l'une des revendications précédentes 7 à 14 **caractérisé par le fait que** le capteur (8) du dispositif (4) est disposé à l'intérieur d'un milieu absorbant qui absorbe un volume partiel (5) du liquide (3).

16. Dispositif selon l'une des revendications précédentes 7 à 15 **caractérisé par le fait que** le liquide (3) est un mélange de liquide doté d'un produit anti-gel dans un système de nettoyage de glaces.
